# EUROPEAN PATENT SPECIFICATION

(11) **EP 2 843 750 B1**
(45) Date of publication and mention of the grant of the patent: **21.09.2016**
(21) Application number: 14162798.4
(22) Date of filing: 31.03.2014
(51) Int. Cl.: H01M 10/42, H01M 2/34

(54) **Rechargeable battery pack**
Wiederaufladbares Batteriepaket
Bloc-batterie rechargeable

(30) Priority: 30.07.2013 US 201361860174 P; 28.03.2014 US 201414229516
(43) Date of publication of application: 04.03.2015
(73) Proprietor: Samsung SDI Co., Ltd., Yongin-si, Gyeonggi-do (KR)
(72) Inventor: Ahn, Byung-Kook, Gyeonggi-do (KR)
(74) Representative: Taor, Simon Edward William

(56) References cited:
- US-A1- 2011 129 695
- US-A1- 2011 129 699
- US-A1- 2012 208 047

## Description

The present invention relates to a rechargeable battery pack, for example a tablet type rechargeable battery pack.

A rechargeable battery is a battery that can be repeatedly charged and discharged, unlike a primary battery. A low-capacity rechargeable battery is used for small portable electronic devices such as a mobile phone, a tablet computer, a notebook computer, and a camcorder and a large-capacity rechargeable battery is used as a power supply for driving a motor such as an electric bike, a scooter, an electric vehicle, a fork lift and the like.

The rechargeable battery may be used in a unit battery cell or a pack state in which a plurality of unit battery cells are electrically connected to each other according to a kind of the used device. For example, a rechargeable battery pack may include a plurality of unit battery cells, a protection circuit module (PCM) electrically connecting and protecting the plurality of unit battery cells and a frame receiving the plurality of unit cells and the PCM.

For example, the rechargeable battery pack used in the tablet computer may be configured to receive the unit battery cell in the frame and to attach the unit battery cell and the frame using a label. In this case, the rechargeable battery pack is used in a state in which strength required according to a drop test is not considered and is not separated from the tablet computer by a user.

However, the rechargeable battery pack may be separated from the tablet computer by the user. In this case, the rechargeable battery pack needs the strength required according to the drop test.

US2011/0129699 discloses a battery pack including a frame between a protection cricuit module and a bare cell.

The above information disclosed in this Background section is only for enhancement of understanding of the background of the invention and therefore it may contain information that does not form the prior art that is already known in this country to a person of ordinary skill in the art.

The present invention has been made to address the above problem and some embodiments of the invention provide a rechargeable battery pack formed of a tablet type and having strength required according to a drop test.
An exemplary embodiment of the present invention provides a rechargeable battery pack, including: a unit battery cell formed of a tablet type rechargeable battery; a frame enclosing the unit battery cell; a protective circuit module electrically connected to the unit battery cell to embedded in the frame; and a pair of cases protecting the unit battery cell and the protective circuit module by coupling with both sides of the frame.

The circuit installation part may include a through hole formed at a portion corresponding to a lead tab of the unit battery cell; a position limit protrusion protruded from one side of the through hole to predetermine a position of the lead tab and supporting the protective circuit module; and a circuit supporting protrusion having a height higher than that of the position limit protrusion on the edge of the circuit installation part and supporting the side of the protective circuit module.

The frame may further include an opening part formed on one side of the circuit installation part so that a connector of the protective circuit module is positioned at the outside of the frame.

The frame may include an insertion groove continuously formed at both sides of the frame so that the outer wall of the case is inserted thereinto, and a coupling groove penetrated through from the insertion groove into the outside of the frame.

The coupling grooves may be symmetrically disposed to each other in the frame so as to corresponding to the pair of cases. The case may include a plate part corresponding to both surfaces of the frame and the unit battery cell; an insertion part bent downwardly in the plate part to thereby insert into the insertion groove; an extension part having a width that becomes narrow downwardly in the insertion part; and a coupling protrusion protruded from the extension part to thereby couple to the coupling groove.

The coupling protrusion is formed by cutting the one side and press processing three sides in the extension part. In addition, the coupling protrusion may include a pair of side walls vertically connected with the extension part, an inclined wall that inclinedly connects the side walls in the extension part; and a connecting wall of which the side walls are connected in parallel with the extension part in the inclined wall.
connects the side walls in the extension part; and a connecting wall of which the side walls are connected in parallel with the extension part in the inclined wall.

The side walls, the connecting wall and a cutout line may be a rectangle.

The connecting wall corresponds to width of the coupling groove, such that the side wall may be closely adhered on the inner side wall of the coupling groove.

The coupling protrusion is formed by cutting the one side and press processing three sides in the extension part. In addition, the coupling protrusion may include the pair of side walls inclinedly connected with the extension part, the inclined wall that inclinedly connects the side walls in the extension part; and the connecting wall of which the side walls are connected in parallel with the extension part in the inclined wall.

The side walls, the connecting wall and the cutout line are formed in a rectangle, and the connecting wall has a width narrow than that of the coupling groove, such that the side walls may be spaced apart from the inner side wall of the coupling groove.

The coupling protrusion is formed by cutting in a protrusions and depressions structure and press processing three sides in the extension part. In addition, the coupling protrusion may include the pair of side walls inclinedly connected with the extension part, the inclined wall that inclinedly connects the side walls in the extension part; and the connecting wall of which the side walls are connected in parallel with the extension part in the inclined wall and the cutout line has the protrusions and depressions structure.

According to an aspect of the invention, there is provided a rechargeable battery pack according to claim 1. Preferred features of this aspect are set out in claims 2 to 14.

As described above, the rechargeable battery pack according to an exemplary embodiment of the present invention encloses the tablet type unit battery cell with the frame and has a pair of cases coupled with both sides of the frame to protect the unit battery cell and the protective circuit module embedded therein. That is, the rechargeable battery pack is formed of the tablet type and has the unit battery cell and the protect circuit module embedded in the frame and the case, thereby making it
FIG. 1 is an exploded perspective view of a rechargeable battery pack according to the first exemplary embodiment of the present invention.
FIG. 2 is an exploded perspective view of a unit battery cell used in FIG. 1.
FIG. 3 is a partial exploded perspective view of the frame, the unit battery cell and the protective circuit module shown in FIG. 1.
FIG. 4 is a top plan view of the frame used in FIG. 1. FIG. 5 is a side view of the frame used in FIG. 4.
FIG. 6 is a partial perspective view showing a state in which a pair of cases is separated from the frame.
FIG. 7 is a partial enlarged perspective view of a coupling protrusion of a case.
FIG. 8 is a partial side view showing a state in which a pair of cases is coupled with the frame.
FIG. 9 is a cross-sectional view taken along line IX-IX in FIG. 8.
FIG. 10 is a partial side view showing a state in which a pair of cases is coupled with a frame in a rechargeable battery pack according to the second exemplary embodiment of the present invention.
FIG. 11 is a partial enlarged perspective view of a coupling protrusion of the case used in FIG. 10.
FIG. 12 is a partial side view showing a state in which a pair of cases is coupled with a frame in a rechargeable battery pack according to the third exemplary embodiment of the present invention.
FIG. 13 is a partial enlarged perspective view of a coupling protrusion of the case used in FIG. 12.

The present invention will be described more fully hereinafter with reference to the accompanying drawings, in which exemplary embodiments of the invention are shown. As those skilled in the art would realize, the described embodiments may be modified in various different ways, all without departing from the scope of the present invention. The drawings and description are to be regarded as illustrative in nature and not restrictive. Like reference numerals designate like elements throughout the specification.

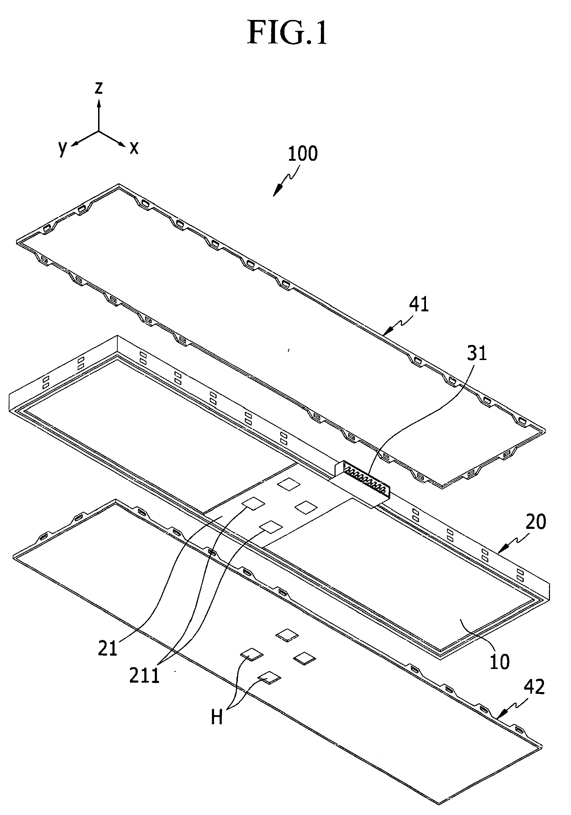

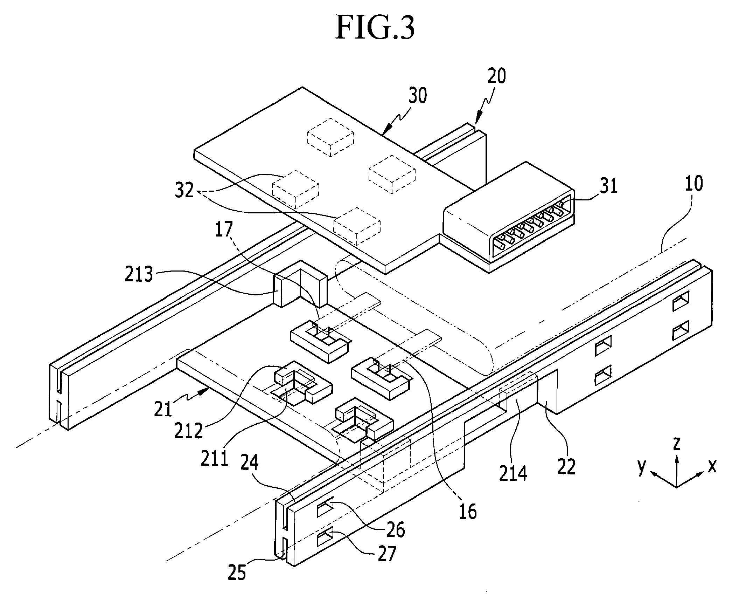

FIG. 1 is an exploded perspective view of a rechargeable battery pack 100 according to the first exemplary embodiment of the present invention. Referring to FIG. 1, the rechargeable battery pack 100 according to the first exemplary embodiment includes a unit battery cell 10 formed of a rechargeable battery, a frame 20 enclosing the unit battery cell 10, a protectively circuit module 30 (see FIG. 3), and a pair of cases 41 and 42.

In this embodiment, the frame 20 encloses the unit battery cell 10. In other embodiments, the frame 20 may be arranged to at least partially surround side surfaces of the battery cell 10.

The rechargeable battery pack 100 according to the first exemplary embodiment includes the two unit battery cells 10, but it may include one or more unit battery cells 10. The unit battery cell 10 is formed of a tablet type rechargeable battery in this embodiment, but embodiments of the invention are not limited thereto.

The frame 20 encloses the outer side of the thin unit battery cell 10, and the pair of cases 41 and 42 covers a wide upper and lower surfaces of the unit battery cell 10. For example, the frame 20 is made of a synthetic resin material, and the pair of cases 41 and 42 is made of a metal material, for example, stainless steel.

Here, the protective circuit module 30 is electrically connected to the unit battery cell 10 to protect the unit battery cells 10. In addition, the unit battery cell 10 and the protect circuit module 30 may be protected from the external impact by the pair of cases 41 and 42 and the frame 20. The protective circuit module 30 is formed to mount a circuit element on a printed circuit board so that the unit battery cells 10 may be protected from overcharge, over-discharge, overcurrent and external short.

The case 41 and 42 is coupled with an opening formed in both surfaces of the frame 20 to protect the unit battery cells 10 and the protective circuit module 30, and includes an insulating tape (not shown) on inner surface thereof, to thereby improve the electric insulating property of the unit battery cells 10 and the protective circuit module 30. In addition, the insulating tape protects the unit battery cell 10 from the external impact, thereby making it possible to further improve stability.

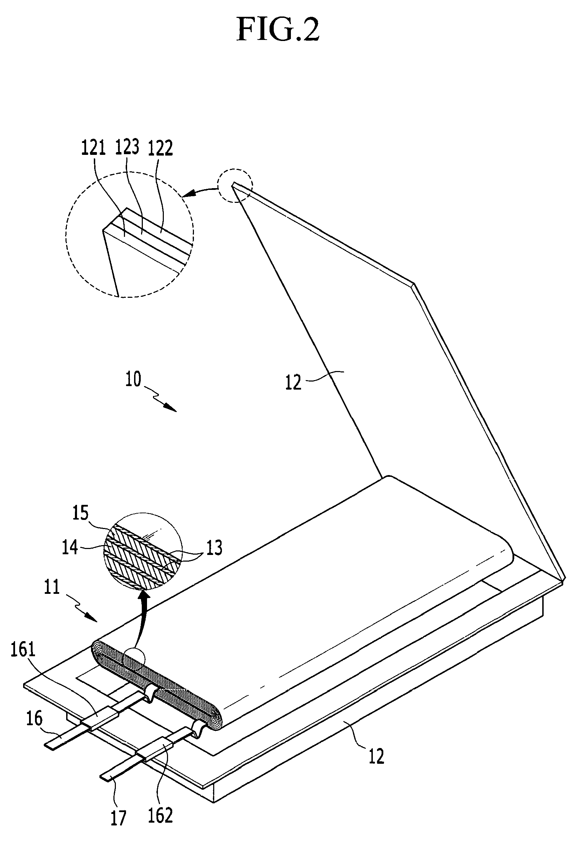

FIG. 2 is an exploded perspective view of the unit battery cell 10 used in FIG. 1. Referring to FIG. 2, the unit battery cell 10 is formed of a pouch type rechargeable battery, and includes an electrode assembly 11 in which charging and discharging are performed and a pouch 12 having the electrode assembly 11 embedded therein.

In this embodiment, the electrode assembly 11 is prepared by disposing and winding a positive electrode 14 and a negative electrode 15 having a separator 13 therebetween, to form a tablet type. As an example, the separator 13 may be formed of a polymer film that transmits lithium-ion.

In this embodiment, the positive electrode 14 includes a coating region formed by applying an active material to a current collector of the metal thin film and an uncoated region formed as a current collector exposed by not applying the active material. For example, the positive electrode 14 may be formed of an aluminum thin film. A positive electrode lead tab 16 is connected to the uncoated region of the positive electrode 14.

In this embodiment, the negative electrode 15 includes a coating region formed by applying an active material which is different from the active material of the positive electrode 14 to the current collector of the metal thin film and an uncoated region formed as the current collector exposed by not applying the active material. For example, the negative electrode 15 may be formed of a copper thin film. A negative electrode lead tab 17 is spaced apart from the positive electrode lead tab 16 and is connected to the uncoated region of the negative electrode 15.

In this embodiment, the pouch 12 has one side formed in a concave structure and the other side formed in a planar structure so as to enclose the outside of the electrode assembly 11, and the edge facing in a state in which they are connected to each other at the one side is joined to each other by heat-fusion, such that the pouch 12 may receive the electrode assembly 11.

In this embodiment, the pouch 12 is formed in a multi-layered sheet structure. For example, the pouch 12 may be formed the polymer sheet 121 forming the inner surface of the pouch and performing the heat-fusion, polyethyleneterephthalate (PET) sheet forming the outer surface thereof to protect the electrode assembly 11, a nylon sheet or PET-nylon composite sheet 122.

As an example, the pouch 12 is provided between the polymer sheet 121 and the PET-nylon composite sheet 122 and includes a metal sheet 123 providing the mechanical strength. For example, the metal sheet 123 may be formed of an aluminum sheet.

In this embodiment, the positive electrode lead tab 16 and the negative electrode lead tab 17 are drawn out to the same side of the electrode assembly 11. Since the positive electrode lead tab 16 and the negative electrode lead tab 17 are protruded outward of the heat-fused pouch 12, the electrode assembly 11 may be electrically connected to an outer portion of the pouch 12.

Here, insulating members 161 and 162 cover the positive and negative electrode lead tabs 16 and 17 on the pouch 12, respectively to electrically insulate the positive and negative electrode lead tabs 16 and 17 from the pouch 12 to thereby improve the electric insulating property of the positive and negative electrode lead tabs 16 and 17.

FIG. 3 is a partial exploded perspective view of the frame 20, the unit battery cell 10 and the protective circuit module 30 shown in FIG. 1. Referring to FIGS. 1 and 3, in the rechargeable battery pack 100, the two unit battery cells 10 that face each other are disposed.

In this embodiment, the frame 20 encloses the two unit battery cells 10 and includes a circuit installation part 21 provided on one side of a portion at which the two unit battery cells 10 face each other. That is, the circuit installation part 21 is provided at one side in a z-axis direction in a central portion of the frame 20 in an x-axis direction. The circuit installation part 21 is arranged to support the protective circuit module 30.

Therefore, the protective circuit module 30 may be installed on the circuit installation part 21 in a state in which it is electrically connected to the two unit battery cells 10. That is, the circuit installation part 21 is joined with the protective circuit module 30 in the z-axis direction.

For embodiments, which comprise two battery cells 10, the frame 20 may be arranged to at least partially surround side surfaces of both battery cells 10, and the circuit installation part 21 may be arranged between the two battery cells 10.

In detail, in this embodiment, the circuit installation part 21 includes a through hole 211, a position limit protrusion 212 and a circuit supporting protrusion 213. The through hole 211 is formed at the portion corresponding to each of the positive and negative electrode lead tab 16 and 17 of the two unit battery cells 10 and welding machine (not shown) may approach the through hole 211, such that the positive and negative electrode lead tabs 16 and 17 may be welded to a welding part 32 of the protective circuit module 30.

In addition the case 42 includes a through hole H (see FIG. 1) corresponding to the through hold 211 and the welding part 32, such that the welding machine may approach through the through holes H and 211 in the state in which the frame 20 is installed in the case 42.

The position limit protrusion 212 opens the one side of the through hole 211 and is protruded in three directions to thereby predetermine the position the positive and negative electrode lead tabs 16 and 17 disposed on the one side opened and to support the protective circuit module 30. Since the position limit protrusion 212 is protruded from the bottom surface of the circuit installation part 21, the position of the positive and negative electrode lead tabs 16 and 17 is predetermined when the unit battery cell 10 is disposed on the frame 20 in order to weld the positive and negative electrode lead tabs 16 and 17. In addition, since the position limit protrusion 212 is protruded from the bottom surface, thereby preventing a circuit portion of the protective circuit module 30 from being contacted with the positive and negative electrode lead tabs 16 and 17.

The circuit supporting protrusion 213 is disposed on the edge diagonally across on the circuit installation part 21 in a diagonal direction (that is, attached to the upper surface of the circuit installation part 21 and the inner side wall of the frame 20) and is protrudedly formed to have a height higher than that of the position limit protrusion 212 to support the side surface of the protective circuit module 30. That is, the protective circuit module 30 has the position of a plane (xy plane) set by the circuit supporting protrusion 213 and the position in the z-axis direction set by the position limit protrusion 212. Therefore, the protective circuit module 30 may be stably installed to the circuit installation part 21 and may be supported.

The protective circuit module 30 includes the connector 31 at one side thereof and draws out the connector 31 to the outside of the frame 20, to thereby supply a power to load for the set. For this purpose, the frame 20 is provided with the opening part 22 formed at one side of the circuit installation part 21. The connector 31 of the protective circuit module 30 may be disposed to the outside of the frame 20 through the opening part 22. The catching protrusion 214 is provided on inner side of the opening part 22 to support the rear of the connector 31 inserted into the opening part 22, such that the protective circuit module 30 is maintained in a state in which it is stably installed.

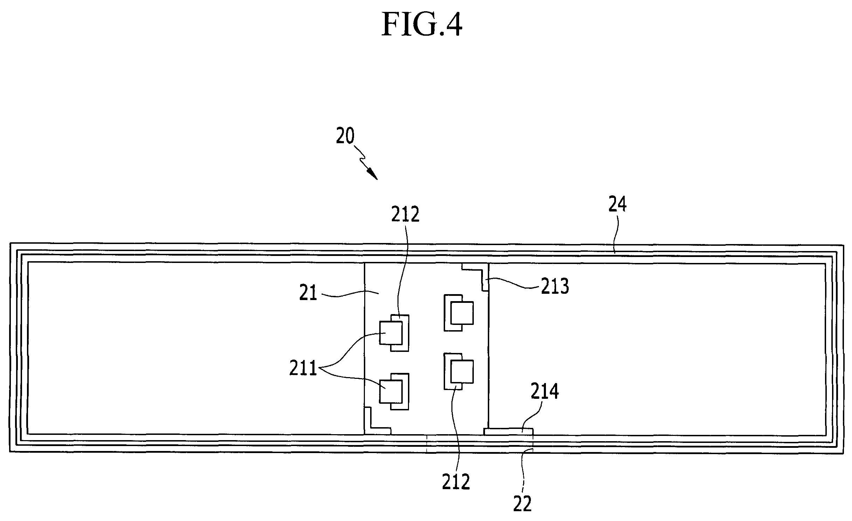

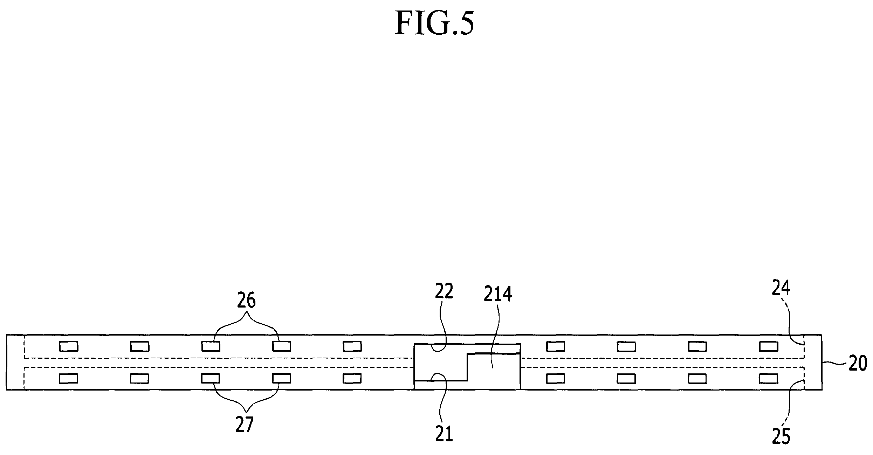

FIG. 4 is a top plan view of the frame 20 used in FIG. 1 and FIG. 5 is a side view of the frame 20 used in FIG. 4. Referring to FIGS. 4 and 5, the frame 20 includes an insertion groove 24 and 25 continuously formed at both sides of the frame so that the outer wall of a pair of cases 41 and 42 is inserted thereinto, and the coupling groove 26 and 27 penetrated through from the insertion groove 24 and 25 into the outside of the frame 20.

The coupling groove 26 and 27 are symmetrically disposed to each other in the frame 20 in the z-axis direction so as to corresponding to each of the pair of cases 41 and 42. Therefore, the pair of cases 41 and 42 is symmetrically formed to each other corresponding to the coupling groove 26 and 27.

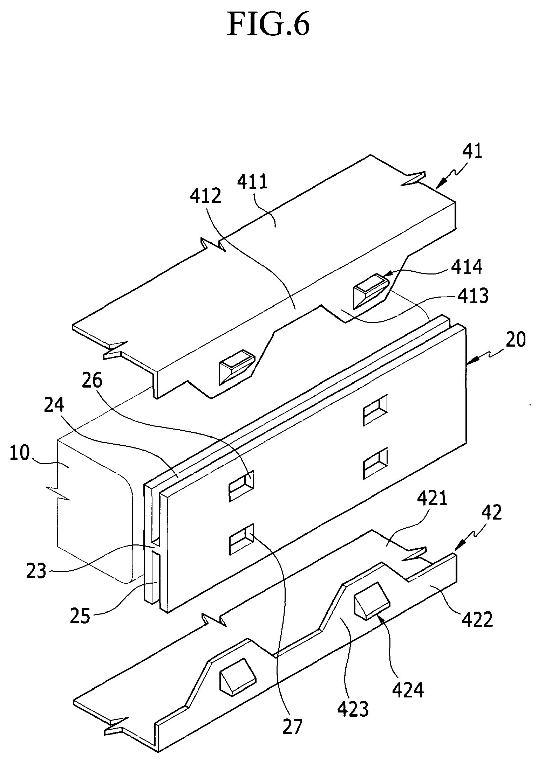

FIG. 6 is a partial perspective view showing a state in which a pair of cases 41 and 42 is separated from the frame 20. Referring to FIG. 6, the pair of cases 41 and 42 includes a plate part 411 and 421, an insertion part 412 and 422, an extension part 413 and 423 and a coupling protrusion 414 and 424 so that it is coupled with the frame 20 to receive the unit battery cell 10.

The plate part 411 and 421 is formed in a plate shape to correspond to the both surfaces of the unit battery cell 10 and the frame 20 and covers the both surfaces of the unit battery cell 10 and the frame 20 in the z-axis direction. The insertion part 412 and 422 is bended at a perpendicular angle to the plate part 411 and 421 and is inserted into an insertion groove 24 and 25 formed in the both surfaces of the frame 20 in the z-axis direction.

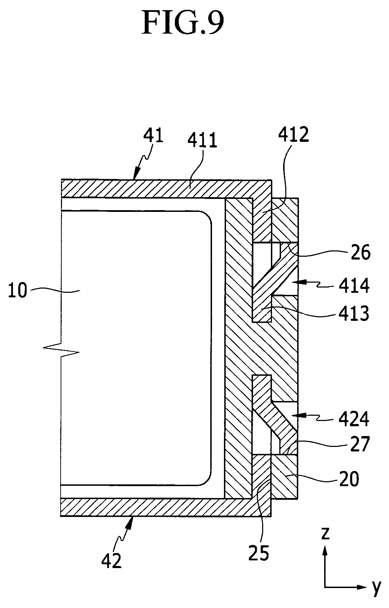

A plurality of extension parts 413 and 423 is disposed to correspond to the insertion groove 24 and 25 along the insertion part 412 and 422. Further, the plurality of extension parts 413 and 423 are extended in a width that becomes narrow downwardly in the insertion part 412 and 422 and may be disposed to be opposite to each of the coupling grooves 26 and 27 in the insertion grooves 24 and 25 (see FIG. 9). The coupling protrusions 414 and 424 are protruded from the extension parts 413 and 423 in the y-axis (or x-axis) direction and may be connected to each of the coupling grooves 26 and 27(see FIG. 9).

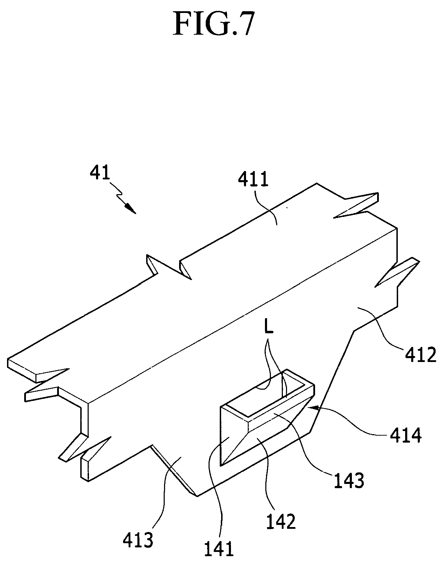

FIG. 7 is a partial enlarged perspective view of a coupling protrusion 414 of a case 41. The coupling protrusions 414 and 424 are formed in the same shape, for convenience, the coupling protrusion 414 will be described as an example.

Referring to FIG. 7, the coupling protrusion 414 is formed on the extension part 413 so that it is inserted into the insertion groove 24 to couple with the coupling groove 26 and is formed in a three-dimensional structure including a pair of side walls 141, an inclined wall 142 and a connecting wall 143.

The pair of side walls 141 is vertically connected to the extension part 413 in both ends of the cutout line L by cutting the one side and press processing the cutout line L and the remaining three sides in the extension part 413.

The inclined wall 142 is inclinedly connected to the pair of side walls 141 in the opposite side extension part 413 for the cutout line L. Therefore, the inclined wall 142 effectively leads the coupling protrusion 414 inserted into the insertion groove 24.

The connecting wall 143 connects between the side walls 141 in the inclined wall 142 and maintains a state in which it is disposed in parallel with the extension part 413. In addition, the end of the connecting wall 143 formed in the cutout line L and end of the side wall 141 are formed to have opened structure at an opposite side of the inclined wall 142 to couple with the coupling groove 26. Accordingly, the coupling protrusion 414 may maintain joint force for the frame 20 in the z-axis direction.

Hence, in this embodiment, the coupling part (protrusion) 414 is arranged to taper such that it protrudes less in the insertion direction. In this embodiment, the coupling part 414 comprises two opposite side walls 141 that protrude from the extension part (portion) 413, the two opposite side walls 141 tapering from a first end of the coupling part 414 to a second end of the coupling protrusion 414 in the insertion direction. The connecting wall 143 connects the two opposite side walls 141. The two opposite side walls 141 and the connecting wall 143 define an opening that faces away from the insertion direction.

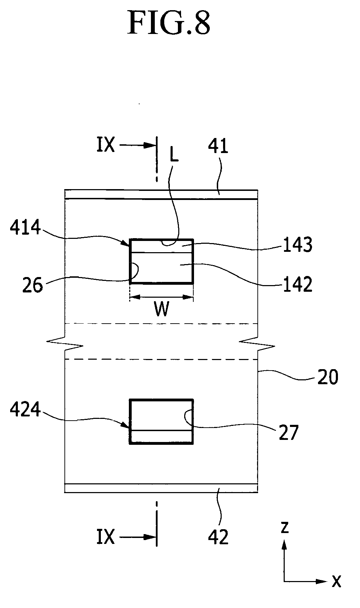

FIG. 8 is a partial side view showing a state in which a pair of cases 41 and 42 is coupled with the frame 20 and FIG. 9 is a cross-sectional view taken along line IX-IX in FIG. 8 Referring to FIGS. 8 and 9, the side wall 141, the connecting wall 143 and the cutout line L in the coupling protrusion 414 are formed in the rectangle.

If the case 41 is coupled to the frame 20, the coupling protrusion 414 is coupled to the coupling groove 26, in this case, the connecting wall 143 corresponds to the width W of the coupling groove 26 and the side wall 141 provided on both sides of the connecting wall 143 is closely adhered to the inner side wall of the coupling groove 26.

Therefore, the case 41 may prevent flow in the frame 20 in the x-axis direction. Although not described, if the case 42 is coupled to the frame 20, the coupling protrusion 424 is coupled to the coupling groove 27 in the same structure as the coupling protrusion 414.

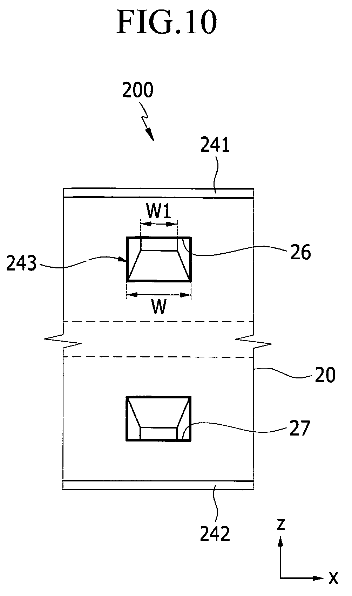

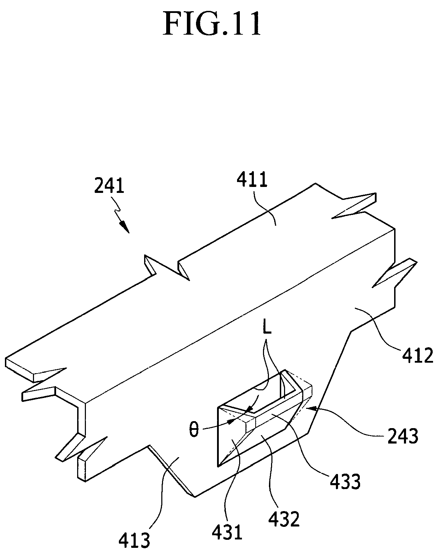

FIG. 10 is a partial side view showing a state in which a pair of cases 241 and 242 is coupled with a frame 20 in a rechargeable battery pack 200 according to the second exemplary embodiment of the present invention and FIG. 11 is a partial enlarged perspective view of a coupling protrusion 243 of the case 241 used in FIG. 10.

Referring to FIGS. 10 and 11, the coupling protrusion 243 is formed in the three-dimensional structure including the pair of side walls 431, the inclined wall 432 and the connecting wall 433.

The pair of side walls 431 is inclined connected to the extension part 413 in both ends of the cutout line L by cutting the one side and press processing the cutout line L and the remaining three sides from the extension part 413. That is, the side wall 431 is inclined with an angle of inclination θ of the side wall 141 according to the first exemplary embodiment.

The inclined wall 432 is inclinedly connected to the pair of side walls 431 in the opposite side extension part 413 for the cutout line L. Therefore, the side wall 431 and the inclined wall 432 effectively leads the coupling protrusion 243 inserted into the insertion groove 24.

The connecting wall 433 connects between the side walls 141 in the inclined wall 432 and maintains a state in which it is disposed in parallel with the extension part 413. In addition, the end of the connecting wall 433 formed in the cutout line L and end of the side wall 431 are formed to have opened structure at an opposite side of the inclined wall 432 to couple with the coupling groove 26. Accordingly, the coupling protrusion 243 may maintain joint force for the frame 20 in the z-axis direction.

The side wall 431, the connecting wall 433, and the cutout line L are formed in the rectangle. If the case 241 is coupled to the frame 20, the coupling protrusion 243 is coupled with the coupling groove 26. Here, the connecting wall 433 has a width Wi narrow than the width W of the coupling groove 26, and the side wall 431 provided in the both sides of the connecting wall 433 is spaced apart from the inner side wall of the coupling groove 26. Therefore, if the case 241 is coupled to the frame 20, the coupling protrusion 243 may be easily coupled with the coupling groove 26.

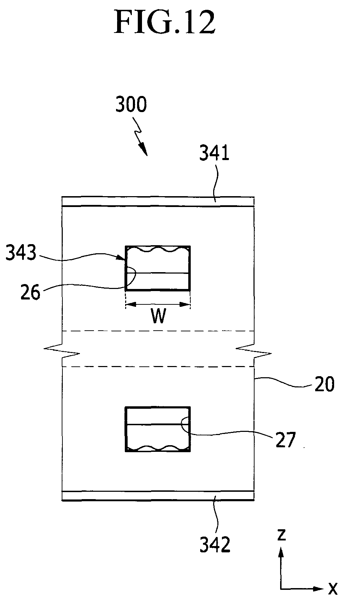

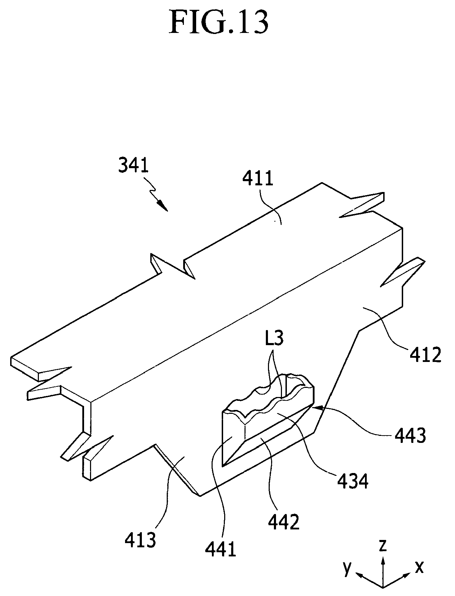

FIG. 12 is a partial side view showing a state in which a pair of cases 341 and 342 is coupled with a frame 20 in a rechargeable battery pack 300 according to the third exemplary embodiment of the present invention and FIG. 13 is a partial enlarged perspective view of a coupling protrusion 343 of the case 341 used in FIG. 12.

The coupling protrusion 4i4, 424, and 243 according to the first and second exemplary embodiments has the cutout line L formed in a straight line and the coupling protrusion 343 according to the third exemplary embodiment has the cutout line L3 formed in a protrusions and depressions structure.

Referring to FIGS. 12 and 13, the coupling protrusion 343 is formed in the three-dimensional structure including the pair of side walls 341, the inclined wall 342 and the connecting wall 343.

The pair of side walls 341 is inclinedly connected to the extension part 413 in both ends of the cutout line L3 by cutting the one side in a protrusions and depressions structure and press processing the cutout line L3 and the remaining three sides from the extension part 413.

The inclined wall 342 is inclinedly connected to the pair of side walls 341 in the opposite side extension part 413 for the cutout line L3. Therefore, the side wall 341 and the inclined wall 342 effectively leads the coupling protrusion 343 inserted into the insertion groove 24.

The connecting wall 343 connects between the side walls 341 in the inclined wall 342 and maintains a state in which it is disposed in parallel with the extension part 413. In addition, the end of the connecting wall 343 formed in the cutout line L3 and end of the side wall 341 are formed to have opened structure at an opposite side of the inclined wall 342 to couple with the coupling groove 26.

In this case, the connecting wall 434 and the side wall 341 has the protrusions and depressions structure corresponding to the cutout line L3 forming the opening structure. In the state in which the coupling protrusion 343 of the metal material is coupled with the coupling groove 26 of the synthetic resin material, the protrusions and depressions structure of the connecting wall 434 and the side wall 341 is press-fitted into the coupling groove 26 of the frame 20. Hence, in this embodiment, the ends of two opposite side walls 314 and the connecting wall 434 that face away from the insertion direction form a series of protrusions and depressions. Therefore, the coupling protrusion 343 may maintain a strong joint force for the frame 20 in the x-and z-axes directions.

As discussed, embodiments of the invention provide a rechargeable battery pack comprising: a battery cell; a protective circuit module electrically connected to the battery cell; a frame arranged to at least partially surround side surfaces of the battery cell, wherein the frame comprises a circuit installation part arranged to support the protective circuit module; a first case and a second case arranged to receive the battery cell and to be coupled to the frame.

In some embodiments, the circuit installation part may be arranged at a side region of the battery cell. In some such embodiments, the battery cell may be relatively thin with two major surfaces separated by relatively short side surfaces, and the circuit installation part may be arranged in a plane parallel to the major surfaces. The protective circuit module may be generally planar, and hence the protective circuit module may be supported at a side region of the battery cell, with the protective circuit module arranged in a plane parallel to the major surfaces of the battery cell.

In some embodiments, the rechargeable battery pack is a tablet type rechargeable battery pack.

In some embodiments, the rechargeable battery pack comprises two battery cells, and the frame is arranged to at least partially surround side surfaces of both battery cells, and the circuit installation part is arranged between the two battery cells.

In some embodiments, the frame comprises a side wall adjacent a side surface of the battery cell, wherein the side wall comprises a first insertion groove at a first end of the side wall, and wherein an insertion part of the first case is arranged to be received in the first insertion groove to couple the first case to the frame.

In some embodiments, the insertion part of the first case comprises an engagement part for engagement with a corresponding engagement part of the side wall.

In some embodiments, the insertion part of the first case comprises an extension portion arranged to extend in an insertion direction towards the first end of the side wall, and a coupling protrusion arranged to protrude from the extension portion; and the side wall comprises a coupling groove arranged to receive the coupling protrusion. In such embodiments, the coupling protrusion may be arranged to taper such that it protrudes less in the insertion direction. In such embodiments, the coupling protrusion may comprise: two opposite side walls that protrude from the extension portion, the two opposite side walls tapering from a first end of the coupling protrusion to a second end of the coupling protrusion in the insertion direction; and a connecting wall arranged to connect the two opposite side walls. The two opposite side walls and the connecting wall may define an opening that faces away from the insertion direction. In such embodiments, the ends of two opposite side walls and the connecting wall that face away from the insertion direction may form a series of protrusions and depressions.

In some embodiments, the width of coupling protrusion is equal to the width of the coupling groove.

In some embodiments, the insertion part of the first case comprises a plurality of said extension portions and coupling protrusions for respective engagement with a plurality of corresponding coupling grooves of the side wall.

In some embodiments, the side wall comprises a second insertion groove at a second end of the side wall opposite the first end, and wherein an insertion part of the second case is arranged to be received in the second insertion groove to couple the second case to the frame. The insertion part of the second case may comprise an extension portion arranged to extend in a second case insertion direction towards the second end of the side wall, and a coupling protrusion arranged to protrude from the extension portion. The side wall may comprise a coupling groove arranged to receive the coupling protrusion.

In some embodiments, the protective circuit module is electrically connected to first and second electrode tabs of the battery cell, and the circuit installation part may comprises through holes to enable welding of the first and second electrode tabs of the battery cell to the protective circuit module during manufacture.

In some embodiments, the circuit installation part comprises positioning protrusions arranged to respectively position the first and second electrode tabs of the battery cell.

In some embodiments, the circuit installation part comprises a supporting protrusion arranged to support a side of the protective circuit module.

In some embodiments, the rechargeable battery pack further comprises a connector arranged to connect the protective circuit module to an external device via an opening in the frame. The circuit installation part may comprise a connector protrusion arranged to support the connector.

Although the exemplary embodiment of the present invention has been disclosed, the present invention is not limited to the disclosed embodiments, but, it may be practiced by modifying in many different forms within the scope of the appended claims, the detailed description of the invention, and accompanying drawings.

## Claims

1. A rechargeable battery pack comprising:
two battery cells (10);
a protective circuit module (30) electrically connected to the battery cells (10);
a frame (20) arranged to at least partially surround side surfaces of both the battery cells (10), wherein the frame (20) comprises a circuit installation part (21) arranged to support the protective circuit module (30);
a first case (41) and a second case (42) arranged to receive the battery cell (10) and to be coupled to the frame (20); and
wherein the circuit installation part (21) is arranged between the two battery cells (10).

2. A rechargeable battery pack according to claim 1, wherein the frame (20) comprises a side wall adjacent a side surface of the battery cells (10), wherein the side wall comprises a first insertion groove (24) at a first end of the side wall, and wherein an insertion part (412) of the first case (41) is arranged to be received in the first insertion groove (24) to couple the first case (41) to the frame (20).

3. A rechargeable battery pack according to claim 2, wherein:
the insertion part (412) of the first case (41) comprises an extension portion (413) arranged to extend in an insertion direction towards the first end of the side wall, and a coupling protrusion (414, 243, 343) arranged to protrude from the extension portion (413); and
the side wall comprises a coupling groove (26) arranged to receive the coupling protrusion (414, 243, 343).

4. A rechargeable battery pack according to claim 3, wherein the coupling protrusion (414, 243, 343) is arranged to taper such that it protrudes less in the insertion direction.

5. A rechargeable battery pack according to claim4, wherein the coupling protrusion (414, 243, 343) comprises:
two opposite side walls (141) that protrude from the extension portion (413), the two opposite side walls (141) tapering from a first end of the coupling protrusion (414, 243, 343) to a second end of the coupling protrusion (414, 243, 343) in the insertion direction; and
a connecting wall (143, 433, 434) arranged to connect the two opposite side walls (141).

6. A rechargeable battery pack according to claim 5, wherein the two opposite side walls (413) and the connecting wall (143, 433, 434) define an opening that faces away from the insertion direction.

7. A rechargeable battery pack according to claim 6, wherein ends of two opposite side walls (431) and the connecting wall (434) that face away from the insertion direction form a series of protrusions and depressions.

8. A rechargeable battery pack according to any one of claims 3 to 7, wherein a width of coupling protrusion (414, 243, 343) is equal to a width of the coupling groove (26).

9. A rechargeable battery pack according to any one of claims 3 to 8, wherein the insertion part (412) of the first case (41) comprises a plurality of said extension portions (413) and coupling protrusions (414, 243, 343) for respective engagement with a plurality of corresponding coupling grooves (26) of the side wall.

10. A rechargeable battery pack according to any one of claims 2 to 9, wherein the side wall comprises a second insertion groove (25) at a second end of the side wall opposite the first end, and wherein an insertion part (422) of the second case (42) is arranged to be received in the second insertion groove (25) to couple the second case (42) to the frame (20);
optionally wherein
the insertion part (422) of the second case (42) comprises an extension portion (423) arranged to extend in a second case insertion direction towards the second end of the side wall, and a coupling protrusion (424) arranged to protrude from the extension portion (423); and
the side wall comprises a coupling groove (27) arranged to receive the coupling protrusion (424).

11. A rechargeable battery pack according to any one of claims 1 to 10, wherein the protective circuit module (30) is electrically connected to respective first and second electrode tabs (16, 17) of the battery cells (10), and wherein the circuit installation part (21) comprises through holes (211, 221) to enable welding of the respective first and second electrode tabs (16, 17) of the battery cells (10) to the protective circuit module (30) during manufacture.

12. A rechargeable battery pack according to any one of claims 1 to 11, wherein the circuit installation part (21) comprises positioning protrusions (212) arranged to respectively position the respective first and second electrode tabs (16, 17) of the battery cells (10).

13. A rechargeable battery pack according to any one of claims 1 to 12, wherein the circuit installation part (21) comprises a supporting protrusion (213) arranged to support a side of the protective circuit module (30).

14. A rechargeable battery pack according to any one of claims 1 to 13, further comprising:
a connector (31) arranged to connect the protective circuit module (30) to an external device via an opening (22) in the frame (20);
wherein the circuit installation part (21) comprises a connector protrusion (214) arranged to support the connector (31).

## Patentansprüche

1. Wiederaufladbares Batteriepaket, umfassend:
zwei Batteriezellen (10);
ein Schutzschaltungsmodul (30), das mit den Batteriezellen (10) elektrisch verbunden ist;
einen Rahmen (20), der dazu angeordnet ist, Seitenflächen beider Batteriezellen (10) wenigstens teilweise zu umgeben, wobei der Rahmen (20) einen Schaltungsinstallationsteil (21) umfasst, der dazu angeordnet ist, das Schutzschaltungsmodul (30) zu tragen;
ein erstes Gehäuse (41) und ein zweites Gehäuse (42), die dazu angeordnet sind, die Batteriezelle (10) aufzunehmen, und mit dem Rahmen (20) gekoppelt zu werden; und
wobei der Schaltungsinstallationsteil (21) zwischen den zwei Batteriezellen (10) angeordnet ist.

2. Wiederaufladbares Batteriepaket nach Anspruch 1, wobei der Rahmen (20) eine Seitenwand umfasst, die einer Seitenfläche der Batteriezellen (10) benachbart ist, wobei die Seitenwand eine erste Einführnut (24) an einem ersten Ende der Seitenwand umfasst und wobei ein Einführteil (412) des ersten Gehäuses (41) dazu angeordnet ist, in der ersten Einführnut (24) aufgenommen zu werden, um das erste Gehäuse (41) mit dem Rahmen (20) zu koppeln.

3. Wiederaufladbares Batteriepaket nach Anspruch 2, wobei:
der Einführteil (412) des ersten Gehäuses (41) einen Verlängerungsabschnitt (413), der dazu angeordnet ist, sich in einer Einführrichtung hin zu dem ersten Ende der Seitenwand zu erstrecken, und einen Kopplungsvorsprung (414, 243, 343), der dazu angeordnet ist, von dem Verlängerungsabschnitt (413) vorzuspringen, umfasst; und
die Seitenwand eine Kopplungsnut (26) umfasst, die dazu angeordnet ist, den Kopplungsvorsprung (414, 243, 343) aufzunehmen.

4. Wiederaufladbares Batteriepaket nach Anspruch 3, wobei der Kopplungsvorsprung (414, 243, 343) dazu angeordnet ist, sich derart zu verjüngen, dass er in der Einführrichtung weniger vorspringt.

5. Wiederaufladbares Batteriepaket nach Anspruch 4, wobei der Kopplungsvorsprung (414, 243, 343) umfasst:
zwei gegenüberliegende Seitenwände (141), die von dem Verlängerungsabschnitt (413) vorspringen, wobei die zwei gegenüberliegenden Seitenwände (141) sich in der Einführrichtung von einem ersten Ende des Kopplungsvorsprungs (414, 243, 343) zu einem zweiten Ende des Kopplungsvorsprungs (414, 243, 343) verjüngen; und
eine Verbindungswand (143, 433, 434), die dazu angeordnet ist, die zwei gegenüberliegenden Seitenwände (141) zu verbinden.

6. Wiederaufladbares Batteriepaket nach Anspruch 5, wobei die zwei gegenüberliegenden Seitenwände (413) und die Verbindungswand (143, 433, 434) eine Öffnung definieren, die der Einführrichtung abgewandt ist.

7. Wiederaufladbares Batteriepaket nach Anspruch 6, wobei Enden der zwei gegenüberliegenden Seitenwände (431) und der Verbindungswand (434), die der Einführrichtung abgewandt sind, eine Reihe von Vorsprüngen und Vertiefungen ausbilden.

8. Wiederaufladbares Batteriepaket nach einem der Ansprüche 3 bis 7, wobei eine Breite des Kopplungsvorsprungs (414, 243, 343) gleich einer Breite der Kopplungsnut (26) ist.

9. Wiederaufladbares Batteriepaket nach einem der Ansprüche 3 bis 8, wobei der Einführteil (412) des ersten Gehäuses (41) eine Mehrzahl der Verlängerungsabschnitte (413) und Kopplungsvorsprünge (414, 243, 343) für ein jeweiliges Ineingriffbringen mit einer Mehrzahl entsprechender Kopplungsnuten (26) der Seitenwand umfasst.

10. Wiederaufladbares Batteriepaket nach einem der Ansprüche 2 bis 9, wobei die Seitenwand eine zweite Einführnut (25) an einen zweiten Ende der Seitenwand gegenüber dem ersten Ende umfasst und wobei ein Einführteil (422) des zweiten Gehäuses (42) dazu angeordnet ist, in der zweiten Einführnut (25) aufgenommen zu werden, um das zweite Gehäuse (42) mit dem Rahmen (20) zu koppeln;
wobei optional
der Einführteil (422) des zweiten Gehäuses (42) einen Verlängerungsabschnitt (423), der dazu angeordnet ist, sich in einer zweiten Gehäuseeinführrichtung hin zu dem zweiten Ende der Seitenwand zu erstrecken, und einen Kopplungsvorsprung (424), der dazu angeordnet ist, von dem Verlängerungsabschnitt (423) vorzuspringen, umfasst; und
die Seitenwand eine Kopplungsnut (27) umfasst, die dazu angeordnet ist, den Kopplungsvorsprung (424) aufzunehmen.

11. Wiederaufladbares Batteriepaket nach einem der Ansprüche 1 bis 10, wobei das Schutzschaltungsmodul (30) mit einem jeweiligen ersten und zweiten Elektrodenstreifen (16, 17) der Batteriezellen (10) elektrisch verbunden ist und wobei der Schaltungsinstallationsteil (21) Durchgangslöcher (211, 221) umfasst, um während der Herstellung ein Anschweißen des jeweiligen ersten und zweiten Elektrodenstreifen (16, 17) der Batteriezellen (10) an das Schutzschaltungsmodul (30) zu ermöglichen.

12. Wiederaufladbares Batteriepaket nach einem der Ansprüche 1 bis 11, wobei der Schaltungsinstallationsteil (21) Positionierungsvorsprünge (212) umfasst, die dazu angeordnet sind, jeweils den jeweiligen ersten und zweiten Elektrodenstreifen (16, 17) der Batteriezellen (10) zu positionieren.

13. Wiederaufladbares Batteriepaket nach einem der Ansprüche 1 bis 12, wobei der Schaltungsinstallationsteil (21) einen Tragevorsprung (213) umfasst, der dazu angeordnet ist, eine Seite des Schutzschaltungsmoduls (30) zu tragen.

14. Wiederaufladbares Batteriepaket nach einem der Ansprüche 1 bis 13, weiterhin umfassend:
ein Verbindungsstück (31), das dazu angeordnet ist, das Schutzschaltungsmodul (30) über eine Öffnung (22) in dem Rahmen (20) mit einer externen Vorrichtung zu verbinden;
wobei der Schaltungsinstallationsteil (21) einen Verbindungsstückvorsprung (214) umfasst, der dazu angeordnet ist, das Verbindungsstück (31) zu tragen.

## Revendications

1. Bloc-batterie rechargeable comprenant :
deux éléments de batterie (10) ;
un module de circuit de protection (30) électriquement connecté aux éléments de batterie (10) ;
un bâti (20) agencé pour entourer au moins partiellement des surfaces latérales des deux éléments de batterie (10), dans lequel le bâti (20) comprend une partie d'installation de circuit (21) agencée pour supporter le module de circuit de protection (30) ;
un premier boîtier (41) et un second boîtier (42) agencés pour recevoir l'élément de batterie (10) et être couplés au bâti (20) ; et
dans lequel la partie d'installation de circuit (21) est agencée entre les deux éléments de batterie (10).

2. Bloc-batterie rechargeable selon la revendication 1, dans lequel le bâti (20) comprend une paroi latérale adjacente à une surface latérale des éléments de batterie (10), dans lequel la paroi latérale comprend une première rainure d'insertion (24) au niveau d'une première extrémité de la paroi latérale, et dans lequel une partie d'insertion (412) du premier élément (41) est agencée pour être reçue dans la première rainure d'insertion (24) afin de coupler le premier boîtier (41) au bâti (20).

3. Bloc-batterie rechargeable selon la revendication 2, dans lequel :
la partie d'insertion (412) du premier boîtier (41) comprend une partie d'extension (413) agencée pour s'étendre dans une direction d'insertion vers la première extrémité de la paroi latérale et une saillie de couplage (414, 243, 343) agencée pour faire saillie de la partie d'extension (413) ; et
la paroi latérale comprend une rainure de couplage (26) agencée pour recevoir la saillie de couplage (414, 243, 343).

4. Bloc-batterie rechargeable selon la revendication 3, dans lequel la saillie de couplage (414, 243, 343) est agencée pour se rétrécir progressivement de sorte qu'elle fait moins saillie dans la direction d'insertion.

5. Bloc-batterie rechargeable selon la revendication 4, dans lequel la saillie de couplage (414, 243, 343) comprend :
deux parois latérales opposées (141) qui font saillie de la partie d'extension (413), les deux parois latérales opposées (141) se rétrécissant progressivement à partir d'une première extrémité de la saillie de couplage (414, 243, 343) jusqu'à une seconde extrémité de la saillie de couplage (414, 243, 343) dans la direction d'insertion ; et
une paroi de connexion (143, 433, 434) agencée pour connecter les deux parois latérales opposées (141).

6. Bloc-batterie rechargeable selon la revendication 5, dans lequel les deux parois latérales opposées (413) et la paroi de connexion (143, 433, 434) définissent une ouverture qui est orientée à l'opposé de la direction d'insertion.

7. Bloc-batterie rechargeable selon la revendication 6, dans lequel les extrémités des deux parois latérales opposées (431) et de la paroi de connexion (434) qui sont orientées à l'opposé de la direction d'insertion, forment une série de saillies et de dépressions.

8. Bloc-batterie rechargeable selon l'une quelconque des revendications 3 à 7, dans lequel une largeur de la saillie de couplage (414, 243, 343) est égale à une largeur de la rainure de couplage (26).

9. Bloc-batterie rechargeable selon l'une quelconque des revendications 3 à 8, dans lequel la partie d'insertion (412) du premier boîtier (41) comprend une pluralité desdites parties d'extension (413) et desdites saillies de couplage (414, 243, 343) pour la mise en prise respective avec une pluralité de rainures de couplage (26) correspondantes de la paroi latérale.

10. Bloc-batterie rechargeable selon l'une quelconque des revendications 2 à 9, dans lequel la paroi latérale comprend une seconde rainure d'insertion (25) au niveau d'une seconde extrémité de la paroi latérale opposée à la première extrémité, et dans lequel une partie d'insertion (422) du second boîtier (42) est agencée pour être reçue dans la seconde rainure d'insertion (25) afin de coupler le second boîtier (42) au bâti (20) ;
facultativement dans lequel
la partie d'insertion (422) du second boîtier (42) comprend une partie d'extension (423) agencée pour s'étendre dans une seconde direction d'insertion de boîtier vers la seconde extrémité de la paroi latérale et une saillie de couplage (424) agencée pour faire saillie de la partie d'extension (423) ; et
la paroi latérale comprend une rainure de couplage (27) agencée pour recevoir la saillie de couplage (424).

11. Bloc-batterie rechargeable selon l'une quelconque des revendications 1 à 10, dans lequel le module de circuit de protection (30) est électriquement connecté aux première et seconde languettes d'électrode (16, 17) respectives des éléments de batterie (10), et dans lequel la partie d'installation de circuit (21) comprend des trous débouchants (211, 221) pour permettre le soudage des première et seconde languettes d'électrode (16, 17) respectives des éléments de batterie (10) sur le module de circuit de protection (30) pendant la fabrication.

12. Bloc-batterie rechargeable selon l'une quelconque des revendications 1 à 11, dans lequel la partie d'installation de circuit (21) comprend des saillies de positionnement (212) agencées pour positionner respectivement les première et seconde languettes d'électrode (16, 17) respectives des éléments de batterie (10).

13. Bloc-batterie rechargeable selon l'une quelconque des revendications 1 à 12, dans lequel la partie d'installation de circuit (21) comprend une saillie de support (213) agencée pour guider un côté du module de circuit de protection (30).

14. Bloc-batterie rechargeable selon l'une quelconque des revendications 1 à 13, comprenant en outre :
un connecteur (31) agencé pour raccorder le module de circuit de protection (30) à un dispositif externe via une ouverture (22) dans le bâti (20) ;
dans lequel la partie d'installation de circuit (21) comprend une saillie de connecteur (214) agencée pour supporter le connecteur (31).
